# EUROPEAN PATENT SPECIFICATION

(11) **EP 0 814 393 B1**
(45) Date of publication and mention of the grant of the patent: **14.08.2002**
(21) Application number: 97850083.3
(22) Date of filing: 27.05.1997
(51) Int. Cl.: G05B 19/042

(54) **Control and supervision of electrical components**
Steuerung und Überwachung von elektrischen Teilen
Commande et surveillance de composants électriques

(30) Priority: 20.06.1996 SE 9602505
(43) Date of publication of application: 29.12.1997
(73) Proprietor: TELIA AB, 123 86 Farsta (SE)
(72) Inventor: Eriksson, Anders, 972 33 Lulea (SE); Parasnis, Amalendu, 972 53 Lulea (SE)
(74) Representative: Akerman, Marten Lennart

(56) References cited:
- EP-A- 0 429 056
- EP-A- 0 602 787
- EP-A- 0 698 998
- WO-A-94/28635
- DE-A- 3 842 467
- DE-A- 4 425 876
- FR-A- 2 660 781
- GB-A- 2 286 903
- US-A- 4 850 042
- PATENT ABSTRACTS OF JAPAN vol. 018, no. 549 (E-1618), 19 October 1994 & JP 06 197132 A (KAWASAKI STEEL CORP), 15 July 1994,
- CORCORAN P M ET AL: "A REMOTE ELECTRONIC OBJECT EMULATION SYSTEM FOR HOME BUS APPLICATIONS" IEEE TRANSACTIONS ON CONSUMER ELECTRONICS, vol. 40, no. 3, August 1994, NEW YORK, NY, US, pages 405-410, XP000471200

## Description

### FIELD OF THE INVENTION

The present invention relates to a system and a method for control and supervision of electrical components.

### PRIOR ART

A usual way to control and supervise electrical components today is to utilize a computer which is programmed so that said components are activated or deactivated at a predetermined point of time, or the computer attends to a measurement of a specific component value at a given point of time. For control of electrical components also different kinds of timers are frequently utilized.

DE 44 25 876 discloses a mobile or a stationary intelligent socket (IS), which is connectable to an electrical device. The electrical device is remotely controlled (e.g. turned on and off) by an efficient serial bus system, for example a local operating network (LON) or by other communication networks connected to the LON, such as telecommunication networks and radio networks, or by other transmission media of a LON.

EP 0 698 998 discloses an apparatus controlling interactive services using set-top boxes (STB). The apparatus comprises a network node to which for example an ATM (Asynchronous Transfer Mode) network and a content provider are connected. An access network is further connected to the network node, whereby information from the ATM network or the content provider may be transferred to a power supply unit through the network node and the access network. This information may then be presented on a TV using a STB or transferred to an ISDN-subscriber (Integrated Services Digital Network).

A dual media network interface module for use with electrical local area networks (ELAN) and optical local area networks (optical LAN) is disclosed in US 4,850,042. The disclosed module can function as an expander to increase the number of optical LAN and ELAN nodes in a network. Further the apparatus allows bi-directional signal transmission between all the devices and channels connected to the apparatus while preventing endless message repetition and interference.

A problem with these control and supervision devices is that separate wiring must be made between the control/supervision devices and the component which shall be controlled respective supervised which of course will increase the costs.

Another problem is that the supervision or control devices are arranged comparatively close to the components which shall be controlled or supervised; the distance often varies between about 5 - 1000 m. This leads to that a supervisory operator must be within a very restricted area to be able to supervise said components.

The aim with the present invention consequently is to effect a system for global control and supervision of electrical components; the operator shall in principle be able to control or supervise just any electrical component irrespective of where the operator or component is.

One more aim with the present invention is to eliminate extra wiring between control/supervision devices and electrical components.

### SUMMARY OF THE INVENTION

The above mentioned aims are achieved by a system and a method which is characterized in that a user of said system controls and supervises electrical components/devices connected to an electrical power distribution network by utilizing a public information network, preferably Internet, and said electrical power distribution network for transmission of instructions and data interchange.

An advantage with this is that the user can control/supervise just any electrical component irrespective of where the user or the component is. The user utilizes for instance Internet for this purpose. By utilizing the existing electrical power distribution network connected to the electrical components/devices which shall be controlled/supervised, no extra wiring is required.

Further characteristics of the present invention are given in the subclaims.

### BRIEF DESCRIPTION OF THE DRAWING

The present invention now will be described more in detail with reference to the only drawing.

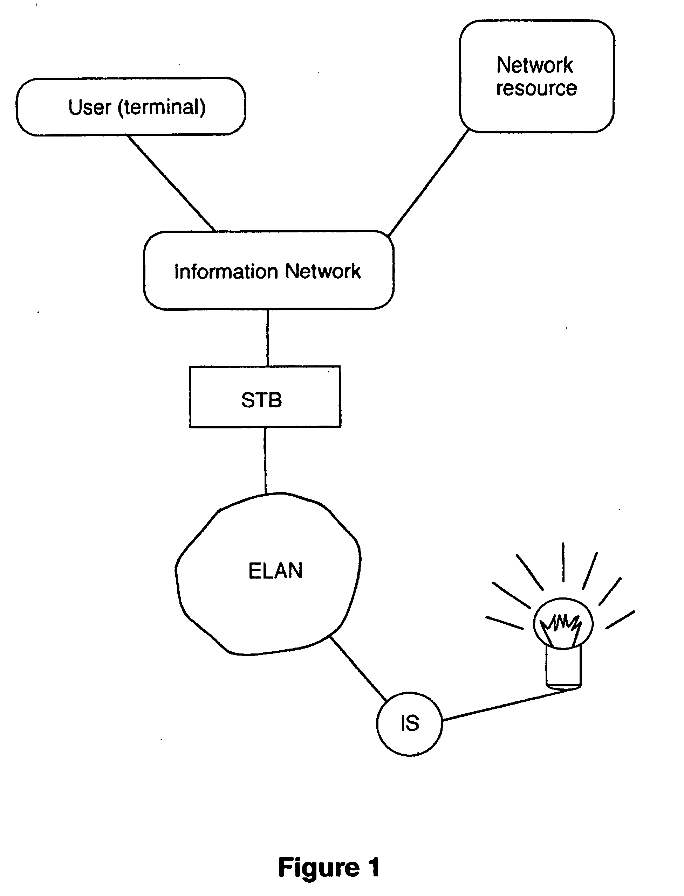

Figure 1 shows the construction of the control or supervision system.

### DETAILED DESCRIPTION OF AN EMBODIMENT OF THE INVENTION

The present invention refers to global control and supervision of electrical components, and in the following description the abbreviation GSEK (SW, GSEK. Global Styming aw Elektriska Komponenter) will be used. More specifically the invention describes a global control and supervision of to an electrical network connected components via an information network, and gives a description of what an implementation of the information network will look like.

By utilizing GSEK the user is offered possibility to control/supervise for instance his/her electrical components by a user-friendly interface. Below are indicated possible ways to utilize GSEK:
* To the holiday-maker is offered for instance a customer adapted program which is executed in the network which during the absence controls lamps, radio, TV etc to simulate people at home and mislead thieves. The program of course can be reconfigured by the user during his/her absence by just any terminal.
* The user can be offered information about the status of electrical components, Remote Status Checking (RSC), of the terminal the user is utilizing at the moment (for instance just anywhere by Internet). This will strikingly facilitate the operation and maintenance supervision of public buildings (hospitals, airports etc).
* Managing of programable components (for instance video, start of sauna, heating of houses, heating of engines) from just any terminal (for instance Internet/WWW).

The GSEK-concept is cost-effective, since no extra wiring is needed at the user. Further, there is no need for control logic at the user, since this is managed by the network resource. The only demand is that the electrical component which shall be controlled is equipped with an IS (Intelligent Socket).

By a measure with very limited influence on the electrical power distribution network the users which have access to a public information network can be offered possibility to control/supervise just any electrical components (for instance video, lamps, microvawe ovens, advertising signs) connected to the electrical power distribution network. As example of possible information networks can be mentioned Internet/WWW.

To offer GSEK no extra wiring is needed because the existing electrical network is utilized as information carrier to the electrical components. The users equipment can be connected just anywhere within a defined area, which gives a certain mobility. Instruction signals and data interchange over the electrical network (the ELAN) between the STB and the IS consequently are superimposed on the alternating voltage signals, U ≈ 220Sin(ωt) where f ≈ 50 Hz, which exist on the usual electrical network. Preferably these signals are transmitted on a frequency of about f ≈ 50 Hz, which signals are filtered out at the IS or the STB by means of a bandpass or highpass filter. In the STB and in the IS there of course also is a mixer which transforms said instruction signals and data interchange signals to the carrier frequency of about 50 kHz.

The in the GSEK-concept included units now will be described in detail with reference to Figure 1.
1) IS
   Intelligent Socket. An entity which communicates with STB over ELAN. By means of this communication IS can in its most simple embodiment control the supply of electrical power to the electrical component which is connected to the IS, and perform measurements on the connected electrical component and inform about the results to the STB/Network resource. Each IS can be uniquely identified by the network resource. This can be realized with today's technology.
2) ELAN
   The existing installation of electrical power network constitutes the local distribution network for instructions and data interchange between STB and ISes. This can be realized with today's technology, but standard equipment does not exist.
3) STB
   This entity receives information from the information network and packets it in suitable way for further transport to the IS over the ELAN. The STB also transmits information in reverse direction. The STB can be placed at an individual user or as a resurse in common for a multiple of user higher up in the electrical power distribution network. This can be realized with today's technology.
4) THE INFORMATION NETWORK
   For further transmission of information between STB and the network resource just any information network can be used. For instance Internet/WWW. This can be realized with today's technology.
5) NETWORK RESOURCE
   An entity which has global control over and executes GSEK; can be realized with today's technology.
6) THE USER
   The subscriber of GSEK.

A user of GSEK utilizes one to the information network connected terminal to inform the network resource about his/her wishes. The network resource interpretes the wishes of the user and translates these into IS-commands and transmits these via the information network to STB for distribution on the ELAN, after which addressed ISes interprete and perform commands.

## Claims

1. A system for a global control and supervision of electrical components/devices connected to an electrical network via a public information network, the system comprising intelligent sockets IS connected to said electrical components/devices and to said electrical network, a user terminal and a network resource connected to said public information network, whereby instructions can be transmitted and data interchanged between said user terminal and said electrical components/devices, **characterized in that** said network resource is arranged to include all control logic required for said transmission of instruction and data interchange, **in that** the network resource is arranged to be accessed from just any terminal connected to the information network and **in that** the network resource is arranged to uniquely identify and address each intelligent socket IS.

2. The system according to claim 1, **characterized in that** the system further comprises an information managing unit STB connected to said public information network and to said electrical network, whereby said managing unit STB is arranged to packet said instructions and data in a suitable way.

3. The system according to claim 2, **characterized in that** said electrical network is an ELAN.

4. The system according to claim 3, **characterized in that** said intelligent socket IS is an entity communicating with said managing unit STB through said ELAN, whereby said IS is arranged to control and/or to perform measurement on the connected component/device and to inform said managing unit STB and/or network resource about the control and/or measurement result.

5. The system according to any of the preceding claims, **characterized in that** said public information network is Internet.

6. A method for a global control and supervision of electrical components/devices connected to an electrical network via a public information network, wherein instructions are transmitted and data interchanged between a user terminal connected to said public information network and electrical components/devices connected to intelligent sockets IS, wherein said intelligent sockets IS are connected to said electrical network, **characterized in that** a network resource includes all control logic required for said transmission of instruction and data interchange, **in that** the network resource may be accessed from any terminal connected to the information network and **in that** the network resource uniquely identifies and addresses each intelligent socket IS.

7. The method according to claim 6, **characterized in that** an information managing unit STB, connected to said public information network and to said electrical network, packets said instructions and data in a suitable way.

8. The system according to claim 7, **characterized in that** said intelligent socket IS communicates with said managing unit STB through an ELAN, whereby said IS controls and/or performs measurement on the connected component/device and informs said managing unit STB and/or network resource about the control and/or measurement result.

9. The method according to claim 6, **characterized in that** a user by means of said user terminal informs a network resource about its control- and/or supervision desires, whereby said network resource translates these desires to IS-commands and transmits them over said public information network, which is Internet, to an information managing unit STB, which STB packets said IS-commands in a suitable way for further transport to the IS over an ELAN, said IS performs measurements on or control one to said IS connected electrical component/device according to said IS-command, whereby said IS transmits net- and/or control-information via said ELAN to said managing unit STB for further transport via Internet to said user.

## Patentansprüche

1. System zur globalen Steuerung und Überwachung von an ein Stromnetz angeschlossenen elektrischen Komponenten/Geräten über ein öffentliches Informationsnetz, wobei das System intelligente Steckanschlüsse IS, die mit den elektrischen Komponenten/Geräten und dem Stromnetz verbunden sind, ein Benutzerterminal und eine mit dem öffentlichen Informationsnetz verbundene Netzresource umfasst, wodurch zwischen dem Benutzerterminal und den elektrischen Komponenten/Geräten Befehle übertragen und Daten ausgetauscht werden können, **dadurch gekennzeichnet, dass** die Netzwerkresource so eingerichtet ist, dass sie alle für die Befehlsübertragung und den Datenaustausch notwendige Software enthält, dass die Netzwerkresource so eingerichtet ist, dass sie von jedem beliebigen, mit dem Informationsnetz verbundenen Terminal zugreifbar ist, und dass die Netzwerkresource so eingerichtet ist, dass sie jeden intelligenten Steckanschluß IS individuell identifizieren und adressieren kann.

2. System nach Anspruch 1, **dadurch gekennzeichnet, dass** das System ferner eine Informationsverwaltungseinheit STB aufweist, die mit dem öffentlichen Informationsnetz und dem Stromnetz verbunden ist, wobei die Verwaltungseinheit STB so eingerichtet ist, dass sie die Befehle und Daten in geeigneter Weise packetiert.

3. System nach Anspruch 2, **dadurch gekennzeichnet, dass** das Stromnetz ein ELAN ist.

4. System nach Anspruch 3, **dadurch gekennzeichnet, dass** der intelligente Steckanschluß IS eine Einheit ist, die mit der Verwaltungseinheit STB über das ELAN kommuniziert, wobei der IS so eingerichtet ist, dass er die angeschlossene elektrische Komponente/Gerät steuert und/oder daran Messungen durchführt und die Verwaltungseinheit STB und/oder die Netzwerkresource über das Ergebnis der Steuerung und/oder Messung informiert.

5. System nach einem der vorangehenden Ansprüche wird **dadurch gekennzeichnet, dass** das öffentliche Informationsnetz das Internet ist.

6. Verfahren zur globalen Steuerung und Überwachung von an ein Stromnetz angeschlossen elektrischen Komponenten/Geräten über ein öffentliches Informationsnetz, wobei Befehle übertragen und Daten ausgetauscht werden zwischen einem mit dem öffentlichen Informationsnetz verbundenen Benutzerterminal und elektrischen Komponenten/Geräten, die mit intelligenten Steckanschlüssen IS verbunden sind, wobei die intelligenten Steckanschlüsse IS mit dem Stromnetz verbunden sind, **dadurch gekennzeichnet, dass** eine Netzwerkresource alle Steuersoftware enthält, die für die Befehlsübertragung und den Datenaustausch erforderlich ist, dass die Netzwerkresource von jedem beliebigen, mit dem Informationsnetz verbundenen Terminal zugegriffen werden kann, und dass die Netzwerkresource jeden intelligenten Steckanschluß IS individuell identifiziert und adressiert.

7. Verfahren nach Anspruch 6, **dadurch gekennzeichnet, dass** eine Informationsverwaltungseinheit STB, die mit dem öffentlichen Informationsnetz und dem Stromnetz verbunden ist, die Befehle und Daten in geeigneter Weise packetiert.

8. System nach Anspruch 7, **dadurch gekennzeichnet, dass** der intelligente Steckanschluß IS mit der Verwaltungseinheit STB über ein ELAN kommuniziert, wobei der IS die angeschlossene Komponente/Gerät steuert und/oder daran Messungen durchführt und die Verwaltungseinheit STB und/oder die Netzwerkresource über das Ergebnis der Steuerung und/oder Messung informiert.

9. Verfahren nach Anspruch 6, **dadurch gekennzeichnet, dass** ein Benutzer mittels des Benutzerterminals eine Netzwerkresource über seine Steuer- und/oder Überwachungswünsche informiert, wobei die Netzwerkresource diese Wünsche in IS-Befehle übersetzt und diese über das öffentliche Informationsnetz, welches das Internet ist, zu einer Informationsverwaltungseinheit STB überträgt, welche STB die IS-Befehle in geeigneter Weise für den weiteren Transport zu den IS über ein ELAN packetiert, dass IS eine Messung oder Steuerung an einer mit dem IS verbundenen elektrischen Komponente/Gerät entsprechend dem IS-Befehl durchführt, wobei der IS Netzund/oder Steuerinformationen über das ELAN zu der Verwaltungseinheit STB überträgt für den weiteren Transport über das Internet zu dem Benutzer.

## Revendications

1. Système pour une commande et une surveillance globales de composants / dispositifs électriques connectés à un réseau électrique via un réseau d'information public, le système comprenant des prises intelligentes IS connectées aux dits composants / dispositifs électriques et au dit réseau électrique, un terminal d'utilisateur et une ressource de réseau connectés au dit réseau d'information public, de sorte que des instructions peuvent être transmises et des données peuvent être échangées entre le dit terminal d'utilisateur et les dits composants /dispositifs électriques, **caractérisé en ce que** la dite ressource de réseau est agencée de manière à inclure toute la logique de commande requise pour la dite transmission d'instructions et le dit échange de données, **en ce que** la ressource de réseau est agencée pour qu'on puisse y accéder à partir de tout terminal connecté au réseau d'information, et **en ce que** la ressource de réseau est agencée pour identifier de façon unique et effectuer l'adressage de chaque prise intelligente IS.

2. Système selon la revendication 1, **caractérisé en ce que** le système comprend en outre une unité de gestion d'information STB connectée au dit réseau d'information public et au dit réseau électrique, de sorte que la dite unité de gestion STB est agencée pour mettre en paquets les dites instructions et les dites données d'une manière appropriée.

3. Système selon la revendication 2, **caractérisé en ce que** le dit réseau électrique est un réseau local électrique ELAN.

4. Système selon la revendication 3, **caractérisé en ce que** la dite prise intelligente IS est une entité qui communique avec la dite unité de gestion STB par l'intermédiaire du dit ELAN, de sorte que la dite IS est agencée pour commander et/ou effectuer des mesures sur le composant / dispositif connecté, et pour informer la dite unité de gestion STB et/ou la dite ressource de réseau en ce qui concerne le résultat de la commande et des mesures.

5. Système selon une quelconque des revendications précédentes, **caractérisé en ce que** le dit réseau d'information public est Internet.

6. Procédé pour une commande et une surveillance globales de composants / dispositifs électriques connectés à un réseau électrique via un réseau d'information public, dans lequel des instructions sont transmises et des données sont échangées entre un terminal d'utilisateur connecté au dit réseau d'information public et des composants / dispositifs électriques connectés à des prises intelligentes IS, dans lequel les dites prises intelligentes IS sont connectées au dit réseau électrique, **caractérisé en ce qu'**une ressource de réseau comprend toute la logique de commande requise pour la dite transmission d'instructions et le dit échange de données, **en ce qu'**on peut accéder à la ressource de réseau à partir de tout terminal connecté au réseau d'information, et **en ce que** la ressource de réseau identifie de façon unique et effectue l'adressage de chaque prise intelligente IS.

7. Procédé selon la revendication 6, **caractérisé en ce qu'**une unité de gestion d'information STB, connectée au dit réseau d'information public et au dit réseau électrique, met en paquets les dites instructions et les dites données d'une manière appropriée.

8. Système selon la revendication 7, **caractérisé en ce que** la dite prise intelligente IS communique avec la dite unité de gestion STB par l'intermédiaire d'un réseau local électrique ELAN, de sorte que la dite IS commande et/ou effectue des mesures sur le composant / dispositif connecté et informe la dite unité de gestion STB et/ou la dite ressource de réseau en ce qui concerne le résultat de la commande et/ou des mesures.

9. Procédé selon la revendication 6, **caractérisé en ce qu'**un utilisateur, au moyen du dit terminal d'utilisateur, informe une ressource de réseau en ce qui concerne ses désirs de commande et/ou de surveillance, de sorte que la dite ressource de réseau traduit ces désirs en instructions d'IS et les transmet sur le dit réseau d'information public, qui est Internet, à une unité de gestion d'informations STB, la dite unité STB met en paquets les dites instructions d'IS d'une manière appropriée pour une transmission à la prise IS sur un réseau local ELAN, la dite prise IS exécute des mesures ou commande un des dits composants / dispositifs électriques connectés à la dite IS conformément à la dite instruction d'IS, de sorte que la dite IS transmet une information de mesure et/ou une information de commande via le dit ELAN à la dite unité de gestion STB pour une nouvelle transmission via Internet au dit utilisateur.
